(19) Europäisches Patentamt / European Patent Office / Office européen des brevets

(11) **EP 4 515 941 B1**

(12) **EUROPEAN PATENT SPECIFICATION**

(45) Date of publication and mention of the grant of the patent:
**28.01.2026  Bulletin 2026/05**

(21) Application number: **23710829.5**

(22) Date of filing: **07.03.2023**

(51) International Patent Classification (IPC):
*H04W 36/00* *(2009.01)*

(52) Cooperative Patent Classification (CPC):
**H04W 36/0085; H04W 36/0058**

(86) International application number:
**PCT/EP2023/055696**

(87) International publication number:
**WO 2023/208460 (02.11.2023 Gazette 2023/44)**

(54) **METHODS FOR UE INITIATED APERIODIC L1 MEASUREMENT REPORT FOR DETECTED CELLS BASED ON L3 MEASUREMENTS**

VERFAHREN FÜR BENUTZERGERÄTEINITIIERTEN APERIODISCHEN L1-MESSBERICHT FÜR ERKANNTE ZELLEN AUF BASIS VON L3-MESSUNGEN

PROCÉDÉS POUR UN RAPPORT DE MESURE L1 APÉRIODIQUE INITIÉ PAR UN UE POUR DES CELLULES DÉTECTÉES SUR LA BASE DE MESURES L3

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **29.04.2022  IN 202241025182**

(43) Date of publication of application:
**05.03.2025  Bulletin 2025/10**

(73) Proprietor: **Nokia Technologies Oy**
**02610 Espoo (FI)**

(72) Inventors:
• **SELVAGANAPATHY, Srinivasan**
**Bangalore 560017 (IN)**
• **HENTTONEN, Tero**
**02760 Espoo (FI)**
• **RANTA-AHO, Karri Markus**
**02600 Espoo (FI)**

• **CHANDRASHEKAR, Subramanya**
**Bangalore 560079 (IN)**

(74) Representative: **Nokia EPO representatives**
**Nokia Technologies Oy**
**Karakaari 7**
**02610 Espoo (FI)**

(56) References cited:
**WO-A1-2021/159351**

• **ERICSSON: "Lower-layer mobility enhancements", vol. RAN WG1, no. Reno, USA; 20191118 - 20191122, 8 November 2019 (2019-11-08), XP051819934, Retrieved from the Internet <URL:https://ftp.3gpp.org/tsg_ran/WG1_RL1/TSGR1_99/Docs/R1-1912060.zip R1-1912060 Lower-layer mobility enhancements.docx> [retrieved on 20191108]**

**Description**

TECHNICAL FIELD

The the disclosure relates generally to communications and, more particularly, to methods for UE initiated aperiodic L1 measurement report for detected cells based on L3 measurements.

BACKGROUND

It is known to prepare channel measurement reports in a communication network.
Document WO 2021/159351 A1 relates to a method for low layer inter-cell mobility management.

SUMMARY

The reader is referred to the appended independent claims. Some preferred features are laid out in the dependent claims.
In accordance with an aspect, an apparatus includes at least one processor; and at least one memory including computer program code; wherein the at least one memory and the computer program code are configured to, with the at least one processor, cause the apparatus at least to: receive a configuration from a radio access network, the configuration related to at least one layer 3 measurement; perform the at least one layer 3 measurement; determine, based on the at least one layer 3 measurement, at least one physical cell identifier that has not already been configured with a channel state information layer 1 measurement; and transmit, towards the radio access network, an aperiodic layer 1 measurement report initiated with a user equipment for the determined at least one physical cell identifier, based on the at least one layer 3 measurement.
In accordance with an aspect, a method includes receiving a configuration from a radio access network, the configuration related to at least one layer 3 measurement; performing the at least one layer 3 measurement; determining, based on the at least one layer 3 measurement, at least one physical cell identifier that has not already been configured with a channel state information layer 1 measurement; and transmitting, towards the radio access network, an aperiodic layer 1 measurement report initiated with a user equipment for the determined at least one physical cell identifier, based on the at least one layer 3 measurement.
In accordance with an aspect, an apparatus includes means for receiving a configuration from a radio access network, the configuration related to at least one layer 3 measurement; means for performing the at least one layer 3 measurement; means for determining, based on the at least one layer 3 measurement, at least one physical cell identifier that has not already been configured with a channel state information layer 1 measurement; and means for transmitting, towards the radio access network, an aperiodic layer 1 measurement report initiated with a user equipment for the determined at least one physical cell identifier, based on the at least one layer 3 measurement.
In accordance with an aspect, a non-transitory program storage device readable by a machine, tangibly embodying a program of instructions executable with the machine for performing operations is provided, the operations comprising: receiving a configuration from a radio access network, the configuration related to at least one layer 3 measurement; performing the at least one layer 3 measurement; determining, based on the at least one layer 3 measurement, at least one physical cell identifier that has not already been configured with a channel state information layer 1 measurement; and transmitting, towards the radio access network, an aperiodic layer 1 measurement report initiated with a user equipment for the determined at least one physical cell identifier, based on the at least one layer 3 measurement.

BRIEF DESCRIPTION OF THE DRAWINGS

The foregoing aspects and other features are explained in the following description, taken in connection with the accompanying drawings.

FIG. 1 is a block diagram of one possible and non-limiting system in which the example embodiments may be practiced.

FIG. 2 shows the signaling procedure for CSI measurement reporting and beam switching based on the report.

FIG. 3 shows the CSI measurement and reporting framework at RRC as per the current specification.

FIG. 4 illustrates network configuration of a UE initiated aperiodic CSI report for a detected set measurement report and the message sequence for the possible solution variants as described herein.

FIG. 5 is an example apparatus configured to implement the examples described herein.

FIG. 6 is an example method performed with a user equipment to implement the examples described herein.

DETAILED DESCRIPTION OF EXAMPLE EMBODIMENTS

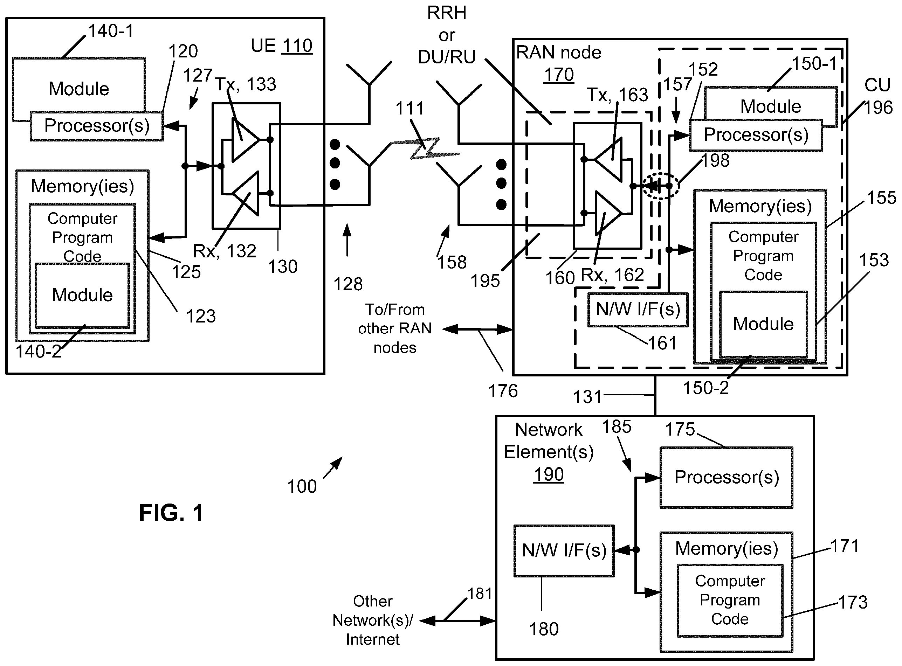

Turning to FIG. 1, this figure shows a block diagram of one possible and non-limiting example in which the examples may be practiced. A user equipment (UE) 110, radio access network (RAN) node 170, and network element(s) 190 are illustrated. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 in this example is a base station that provides access for wireless devices such as the UE 110 to the wireless network 100. The RAN node 170 may be, for example, a base station for 5G, also called New Radio (NR). In 5G, the RAN node 170 may be a NG-RAN node, which is defined as either a gNB or an ng-eNB. A gNB is a node providing NR user plane and control plane protocol terminations towards the UE, and connected via the NG interface (such as connection 131) to a 5GC (such as, for example, the network element(s) 190). The ng-eNB is a node providing E-UTRA user plane and control plane protocol terminations towards the UE, and connected via the NG interface (such as connection 131) to the 5GC. The NG-RAN node may include multiple gNBs, which may also include a central unit (CU) (gNB-CU) 196 and distributed unit(s) (DUs) (gNB-DUs), of which DU 195 is shown. Note that the DU 195 may include or be coupled to and control a radio unit (RU). The gNB-CU 196 is a logical node hosting radio resource control (RRC), SDAP and PDCP protocols of the gNB or RRC and PDCP protocols of the en-gNB that control the operation of one or more gNB-DUs. The gNB-CU 196 terminates the F1 interface connected with the gNB-DU 195. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU 195 is a logical node hosting RLC, MAC and PHY layers of the gNB or en-gNB, and its operation is partly controlled by gNB-CU 196. One gNB-CU 196 supports one or multiple cells. One cell may be supported with one gNB-DU 195, or one cell may be supported/shared with multiple DUs under RAN sharing. The gNB-DU 195 terminates the F1 interface 198 connected with the gNB-CU 196. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station or node.

In FIG. 1, the CU 196 and the DU 195 are shown as being within the same network node. However, in some examples, such as for a disaggregated RAN architecture, the CU 196 and the DU 195 are not within the same network node, and in that case, the CU 196 comprises its own software and hardware (processor, memory, network interfaces, etc.), and the DU 195 comprises its own software and hardware (processor, memory, network interfaces, etc.), where each of the CU 196 and the DU 195 may or may not be a part of another respective apparatus.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memory(ies) 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU 195, and the one or more buses 157 could be implemented in part as, for example, fiber optic cable or other suitable network connection to connect the other elements (e.g., a central unit (CU), gNB-CU 196) of the RAN node 170 to the RRH/DU 195. Reference 198 also indicates those suitable network link(s).

A relay node in NR is called an integrated access and backhaul node. A mobile termination part of the IAB node facilitates the backhaul (parent link) connection. In other words, it is the functionality which carries UE functionalities. The distributed unit part of the IAB node facilitates the so called access link (child link) connections (i.e. for access link UEs, and backhaul for other IAB nodes, in the case of multi-hop IAB). In other words, it is responsible for certain base station functionalities. The IAB scenario may follow the so called split architecture, where the central unit hosts the higher layer protocols to the UE and terminates the control plane and user plane interfaces to the 5G core network.

It is noted that the description herein indicates that "cells" perform functions, but it should be clear that equipment which forms the cell may perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include location management functions (LMF(s)) and/or access and mobility management function(s) (AMF(S)) and/or user plane functions (UPF(s)) and/or session management function(s) (SMF(s)). Such core network functionality for LTE may include MME (Mobility Management Entity)/SGW (Serving Gateway) functionality. Such core network functionality may include SON (self-organizing/optimizing network) functionality. These are merely example functions that may be supported by the network element(s) 190, and note that both 5G and LTE functions might be supported. The RAN node 170 is coupled via a link 131 to the network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, non-transitory memory, transitory memory, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, and 175 may be means for performing functions, such as controlling the UE 110, RAN node 170, network element(s) 190, and other functions as described herein.

In general, the various example embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, head mounted displays such as those that implement virtual/augmented/mixed reality, as well as portable units or terminals that incorporate combinations of such functions.

UE 110, RAN node 170, and/or network element(s) 190, (and associated memories, computer program code and modules) may be configured to implement (e.g. in part) the methods described herein, including methods for UE initiated aperiodic L1 measurement report for detected cells based on L3 measurements. Thus, computer program code 123, module 140-1, module 140-2, and other elements/features shown in FIG. 1 of UE 110 may implement user equipment related aspects of the methods described herein. Similarly, computer program code 153, module 150-1, module 150-2, and other elements/features shown in FIG. 1 of RAN node 170 may implement gNB/TRP related aspects of the methods described herein. Computer program code 173 and other elements/features shown in FIG. 1 of network element(s) 190 may be configured to implement network element related aspects of the methods described herein.

Having thus introduced a suitable but non-limiting technical context for the practice of the example embodiments, the example embodiments are now described with greater specificity.

The examples described herein relate generally to multi-RAT mobility, and specifically to measurements and reporting of measurements. The examples described herein provide a solution for mobility based on measurements of a user equipment (UE). The solution includes L3 measurements for the UE are configured by the gNB and reported to the CU (layer 3). L3 measurements are partly used for other purposes like LLM (Lower Layer Mobility). The UE initiates aperiodic reporting to the DU (layer 1), the UE sends an aperiodic L1 measurement report to the DU (based on an L3 measurement configured by CU), and the DU can initiate LLM based on the received report. Advantages and technical effects of the examples described herein include enabling faster mobility as DU controlled mobility/handover (LLM) is faster than CU controlled Layer 3 handover.

Lower layer mobility (LLM) refers to layer 1 and/or layer 2 mobility, while higher layer mobility refers to layer 3 mobility.

Accordingly, described herein is a method including UE initiated triggering of an aperiodic L1 measurement report to a DU based on L3 measurements configured by a CU, e.g. to enable the DU to initiate LLM based on received report.

A contribution based on the examples described herein is planned for one of the next 3GPP RAN2/3 meetings. The examples described herein require changes to the 3GPP standards (e.g. 38.212 and 38.331), and have the potential to become a standard essential patent in NR.

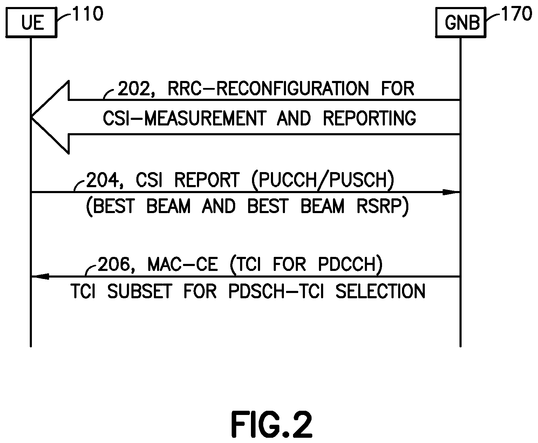

The signaling procedure for CSI measurement reporting and beam switching based on the report is given in FIG. 2. At 202, the gNB 170 transmits to the UE 110 an RRC reconfiguration for CSI measurement and reporting. At 204, the UE 110 transmits to the gNB 170 a CSI report over PUCCH and/or PUSCH. The CSI report includes the best beam and best beam RSRP. At 206, the gNB 170 transmits to the UE 110, using a MAC CE, a TCI for PDCCH, and a TCI subset for PDSCH-TCI selection.

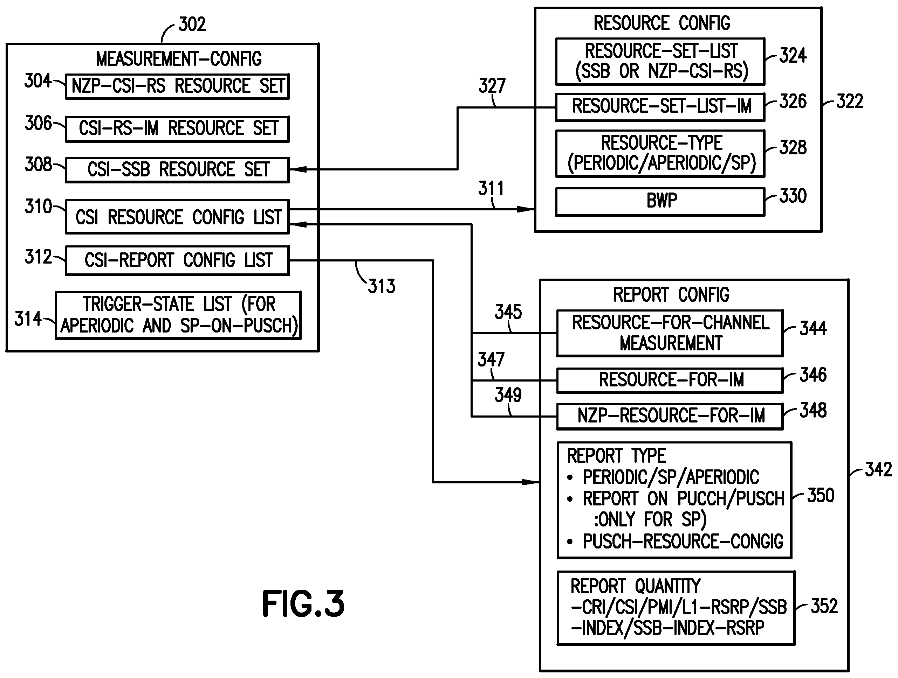

The CSI measurement and reporting framework at RRC as per current specification is illustrated in FIG. 3. The measurement configuration 302 includes an NZP-CSI-RS resource set 304, a CSI-RS-IM resource set 306, a CSI-SSB resource set 308, a CSI-Resource-Config list 310, a CSI-Report-Config list 312, and a trigger-state list 314 (for aperiodic and SP-On-PUSCH). The resource configuration 322 includes a resource-set-list 324 (SSB or NZP-CSI-RS), a resource-set-list-IM 326, a resource type 328 (periodic/aperiodic/SP), and a BWP 330. The report configuration 342 includes a resource for channel measurement 344, a resource-for-IM 346, an NZP-resource-for-IM 348, a report type 350, and report quantity 352.

The report type 350 may be periodic/semi-persistent (SP)/aperiodic, a report on PUCCH/PUSCH (e.g. only for SP), or a PUSCH-Resource-Config. The report quantity 352 may be for example CRI, CSI, PMI, L1-RSRP, SSB-index, or SSB-index-RSRP.

At 311, the CSI-Resource Config List 310 is provided to the resource configuration 322. At 313, the CSI-Report Config list is provided to the report configuration 342. At 327, resource-set-list-IM 326 is provided to the CSI-SSB resource set 308. At 345, the resource-for-channel measurement 344 is provided to the CSI-Resource Config List 310. At 347, the Resource-For-IM 346 is provided to the CSI-Resource Config List 310. At 349, the NZP-Resource-For-IM 348 is provided to the CSI-Resource Config List 310.

Rel-17 intends to enhance the above framework to include SSB or CSI-RS resources of other cells also into the configuration. This will require inclusion of PCI somewhere (e.g. within the CSI-Resource configuration) in the above framework. It is to be noted that L1 RSRP measurements are configured by RRC and these measurements only measure the configured resource location of the reference symbols. L1 measurements do not report any other resource which is not configured in the CSI Resource configuration as per the current specification.

The beam measurements and reporting framework specified in Rel-16 and enhanced for Rel-17 includes reporting of inter-cell beams using the current beam measurement framework where PCI can be included in the target cell CSI resources.

L1 measurements reported via PUCCH/PUSCH measure the configured resources and reports of the L1 measurements use a reporting configuration, where the reporting configuration defines the uplink resources and/or occasions to be used for reporting. For inter-cell (L1) measurements, the target cells need to be included in the measurement configuration prior to the reporting. To support L1/L2 mobility based on L1 measurements towards cells which were not already configured such reporting is needed. As per current specifications it is possible to modify the CSI measurement configuration to include new cells based on L3 measurement reporting to RRC. But this will lead to significant delay in adding the new cells into the measurement framework.

Lower layer mobility enhancements planned in Rel-18 WID aim to make use of L1 measurement reports which are earlier than the actual RRC measurements which are reported after filtering and additional conditions such as TTT for making faster cell change based on a network command at the MAC level. Lower layer mobility also allows the UE to return back of switch across a set of cells quickly based on L1 measurements compared to L3 classic handover or CHO mechanisms which require reconfiguration and RRC level modification of configurations for every cell change.

Use of the CSI measurement framework where the measurement resources are preconfigured enable faster L1-RSRP reporting from the UE (e.g. UE 110) for lower layer mobility. But this requires static measurement resource allocation at target cells preconfigured for this purpose. Hence alternative mechanisms to make use of the L1-RSRP report for mobility without the overhead of CSI measurement configurations is preferred for situations involving inter DU mobility.

Reporting of interim results of ongoing L3 measurements via L1-RSRP is one option for the above scenario. The invention proposes UE initiated aperiodic reporting of detected cells with minimum impact to the current L1-RSRP measurement framework.

## Current Specification Reference for CSI Reporting

### Description of the CSI report structure for RSRP reporting as specified in 3GPP TS 38.212 V15.12.0 (Release 15)

One CSI report defined in table 6.3.1.1-8 consists of two fields defined in table 6.3.1.1.2-6 for each reported RSRP value. Either a CSI-RS Resource indicator (CRI) or SSB Resource Indicator (SSBRI) to identify the signal is reported. Either an absolute RSRP (first reported CRI/SSBRI) or a relative RSRP (other reported CRI/SSBRI) is reported. The Uplink Control Information (UCI) defined in table 6.3.1.1.2-12 concatenates a set of CSI reports (if multiple CSI reports are sent in one UCI).

The bitwidth for CRI, SSBRI, RSRP, and differential RSRP are provided in Table 6.3.1.1.2-6.

**Table 6.3.1.1.2-6: CRI, SSBRI, and RSRP**

| Field | Bitwidth |
|---|---|
| CRI | $\left\lceil \log_2\left(K_s^{\text{CSI-RS}}\right)\right\rceil$ |
| SSBRI | $\left\lceil \log_2\left(K_s^{\text{SSB}}\right)\right\rceil$ |
| RSRP | 7 |
| Differential RSRP | 4 |

In the above table, $K_s^{\text{CSI-RS}}$ is the number of CSI-RS resources in the corresponding resource set, and $K_s^{\text{SSB}}$ is the configured number of SS/PBCH blocks in the corresponding resource set for reporting 'ssb-Index-RSRP'.

Table 6.3.1.1.2-8 of 3GPP TS 38.212 V15.12.0 (Release 15)is shown below

**Table 6.3.1.1.2-8: Mapping order of CSI fields of one report for CRI/RSRP or SSBRI/RSRP reporting**

| CSI report number | CSI fields |
|---|---|
| | CRI or SSBRI #1 as in Table 6.3.1.1.2-6, if reported |

(continued)

| CSI report number | CSI fields |
|---|---|
| CSI report #n | CRI or SSBRI #2 as in Table 6.3.1.1.2-6, if reported |
| | CRI or SSBRI #3 as in Table 6.3.1.1.2-6, if reported |
| | CRI or SSBRI #4 as in Table 6.3.1.1.2-6, if reported |
| | RSRP #1 as in Table 6.3.1.1.2-6, if reported |
| | Differential RSRP #2 as in Table 6.3.1.1.2-6, if reported |
| | Differential RSRP #3 as in Table 6.3.1.1.2-6, if reported |
| | Differential RSRP #4 as in Table 6.3.1.1.2-6, if reported |

Table 6.3.1.1.2-12 of 3GPP TS 38.212 V15.12.0 (Release 15) is shown below.

**Table 6.3.1.1.2-12: Mapping order of CSI reports to UCI bit sequence $a_0,a_1,a_2,a_3,...,a_{A-1}$, without two-part CSI report(s)**

| UCI bit sequence | CSI report number |
|---|---|
| $a_0$ | CSI report #1 as in Table 6.3.1.1.2-7/8 |
| $a_1$ $a_2$ | CSI report #2 as in Table 6.3.1.1.2-7/8 |
| $a_3$ $\vdots$ | ... |
| $a_{A-1}$ | CSI report #n as in Table 6.3.1.1.2-7/8 |

**R1-2104343 : Reporting of L1 filtered beam quantities of L3 measurements in L1 Report**

3.1 Inter-cell beam measurement

It has already been agreed to support L1-RSRP based measurement. The simplest L1 inter-cell beam measurement is to reuse the results of current L3 inter-cell beam management. That is, the network connects L3 inter-cell beam management with the L1 beam report, by configuring several cell IDs or RSs of neighboring cells in L1 beam management or other methods, and then the L1 filtered beam qualities in the L3 procedure could be reported to the network using the current L1 beam report. No new measurement behavior is defined in this case, and the only difference is that the network could obtain the L1 beam qualities of neighboring cells now.

The above description indicates the possibility of the L1 report including interim L3 measurement results. But the actual methods to achieve the same may vary on the signaling methods, efficiency and impact to specifications. Described herein are new methods which enable aperiodic triggering of L1 measurements related to detected cells.

Described herein are the following methods for the UE 110 to send L1-fitered L3 measurements of PCI which are not already configured via a CSI measurement configuration for L1-RSRP reporting.

**Method 1**: The UE 110 is configured with a dedicated preamble and a PUSCH configuration or PUCCH configuration to send a 1 bit SR for sending the aperiodic L1 report from the network (e.g. RAN node 170). Whenever a filtered interim L3 measurement result indicates a new cell which is not part of current L1-measurements, if the preamble and PUSCH is configured similar to 2 step RACH, the UE sends the preamble followed by Msg-A containing the detected PCI and their RSRP values. The number of detected cells to be included is configurable. Whenever a filtered interim L3 measurement result indicates a new cell which is not part of current L1-measurements, if a PUCCH resource for SR is configured, the UE trigger this SR and awaits PUSCH allocation which is sent in PDCCH with a specific RNTI (L1-RSRP-RNTI). The UE sends the L1-RSRP report on this allocation using the CSI RS Report format.

**Method 2**: The UE 110 is configured to send the aperiodic L1-RSRP report for detected cells in any one of the ongoing L1-RSRP reports with fixed scrambling of CRC bits, and the UCI bits are re-interpreted as 'detected cell report contents' along with reserved bits.

**Method 3**: One of the reserved fields of the current CSI Report described herein is used to indicate that the UE 110 has detected PCI measurement results. The NW (e.g. RAN node 170) triggers new aperiodic CSI Reporting using PDCCH. Here the PDCCH indicates that the resources are meant to report 'detected PCI and measurements'. This is two step approach for obtaining the detected cell RSRP values based on L3 measurements.

Aspects of the herein described methods include the UE triggering the 2 step RACH procedure or scheduling request to send L1-RSRP reports of detected cells, UCI content re-interpretation for aperiodic detected set reporting with CRC masking with fixed bits as indication of presence of modified contents of UCI, and reserved bits of the existing L1-RSRP report to indicate the availability of L1-RSRP measurements and a DCI based aperiodic CSI report with a new flag in DCI indicating a 'detected set report' instead of a normal aperiodic CSI-Report.

The detailed steps all possible solution variants for UE initiated detected PCI reporting via L1 are given as follows.

### Solution 1: Aperiodic reporting of 'detected set measurements' using 2 step-RACH or SR+PUSCH combination

In this case, the NW (e.g. RAN node 170) configures the UE 110 with uplink resources for '2-step-RACH' or 'short PUCCH' resources for sending a one 1 bit SR.

Solution steps include, depending on serving cell beam measurements, that the DU 195 can activate the 'uplink resources for aperiodic reporting' via a MAC CE. The UE 110 sends the preamble and PUSCH if 2-step-RACH resources are configured for aperiodic reporting. Msg-A content is now interpreted as 'detected set PCI measurements'. The Msg-A preamble can be used to differentiate the "normal" and "UCI-reporting" procedure. The format can be directly defined in 38.2xx specs and interpreted as an L1 report, or the Msg-B could carry a MAC-CE that is interpreted on the MAC layer. The UE sends the SR on the short PUCCH allocated for this purpose. On detecting this 'SR' on short PUCCH, PDCCH can assign PUSCH/PUCCH resource to receive a new 'UCI' containing detected set measurements. The reporting could be a new type of aperiodic CSI report, or a new MAC-CE.

### Solution 2: UCI Modification with CRC Masking as indication for modified UCI content

Solution 2 includes: 1. Re-interpretation of UCI contents for aperiodic detected PCI reporting with CRC bit masking to differentiate the report contents, and 2. Uplink UCI information includes 6-12 bits for the CRC check in the current specification. This method proposes 'repurpose' of CSI contents with change of CRC-mask.

Solution 2 steps include, whenever the UE 110 detects a PCI outside the configured CSI-Resources and some of the detected PCI measurement results are above a specific threshold for L1 based switching, the UE is to 'steal' one of the ongoing period CSI reports to send the 'detected PCI information' in the current UCI bits, and the UE masks the CRC bits with a fixed pattern to differentiate the reporting from the regular CSI Report. This will allow the gNB to detect which format the UCI is taking by checking the CRC with and without the mask. UCI has a 6-bit CRC for 12... 19 bits and an 11-bit CRC for >19 bits. A bit mask of 010101 or 101010 for the 6-bit CRC and similar 01's or 10's for the 11-bit CRC would provide the largest distance between the two, but a configurable mask could also be considered. In case if there are additional bits available in UCI that the stolen bits don't fulfill they are padded with 0 so that it will not impact the receiver processing at the UCI.

The network (e.g. RAN node 170) may configure the set of periodic report configurations where this 'multiplexing' is allowed, or it could define that e.g. a specific subset of CSI-reports (e.g. every Nth) of one report configuration may end up with the stolen UCI bits. This enables the network to monitor for the CRC mask on specific reports only not in all CSI Reports.

### Solution 3: Two step CSI Report

Solution 3 includes a. the UE 110 makes use of a reserved bit in the periodic CSI report to indicate that it has detected a PCI outside the current set, and b. the network (e.g. RAN node 170) triggers a new aperiodic CSI report with DCI indicating 'report-type' as 'detected measurements'. The UE sends an aperiodic CSI report and the contents are defined as per 'detected set reporting'. Alternatively, this step (b) could be to schedule the UE to transmit a MAC-CE carrying the new 'detected set reporting'.

Solution 2 uses a CRC mask to differentiate between the regular CSI report and the new mobility CSI report, as step 1, and step 2 is the report itself; that is in this case the two steps take place at the same time and there is no network scheduling/triggering between the two steps.

Solution 1 with SR and PUSCH and Solution 3 may be seen as similar solutions, where step 1 is in Solution 1 a dedicated SR and in Solution 3 a bit on the CSI report, and step 2 could be aperiodic CSI, or a MAC-CE triggered by the gNB 170.

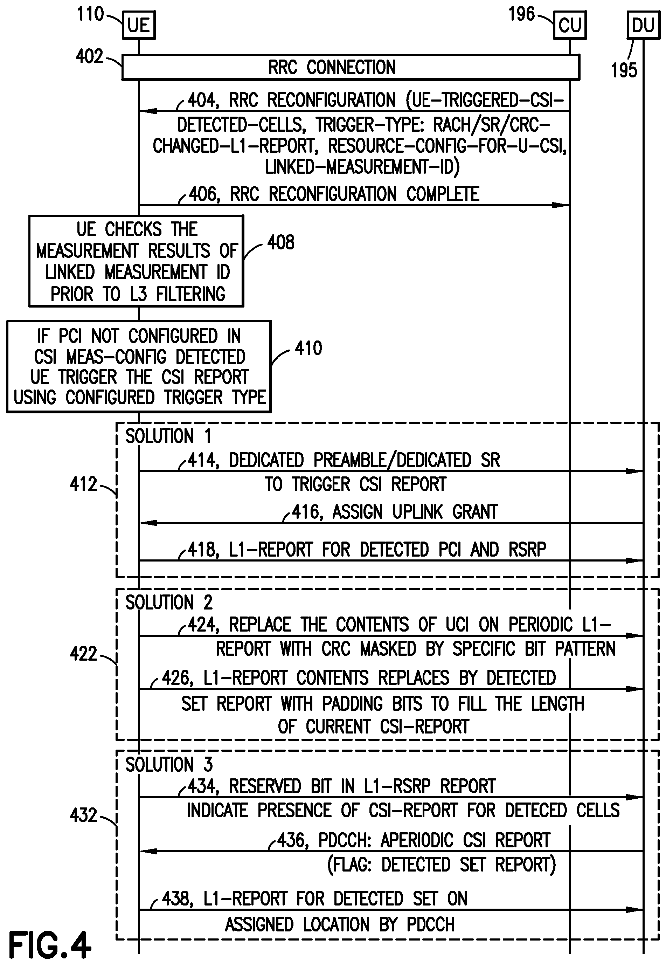

FIG. 4 illustrates network configuration of the UE initiated aperiodic CSI Report for the detected set measurement report and the message sequence for all possible solution variants described herein.

At 402, the UE 110 and CU 196 engage in an RRC connection procedure. At 404, the CU 196 transmits an RRC reconfiguration to the UE 110, where the RRC reconfiguration comprises UE-Triggered-CSI-Detected-cells, a trigger type, a resource-config-for-UE-triggered-CSI report, and a linked-measurement-ID. The trigger type may be RACH, Scheduling Request (SR), or CRC-changed-L1-report. At 406, the UE 110 transmits an RRC reconfiguration complete message to the CU 196. At 408, the UE checks the measurement results of the linked measurement ID prior to L3 filtering. At 410, if the PCI is not configured in a detected CSI measurement configuration, the UE 110 triggers the CSI report using the configured trigger type.

In an embodiment, the trigger type in step 404 is not configured out of the list, and there is just one trigger type specified, and that specified trigger type would be used for the report. Similarly, in an embodiment, the step 410 does not use a "configured type", but rather a "specified type" and there would be just one type, so reference to the report type would not be needed.

Solution 1 412 comprises items 414, 416, and 418. At 414, the UE 110 transmits to the DU 195 a dedicated preamble or dedicated SR to trigger the CSI report. At 416, the DU 195 transmits to the UE 110 an assigned uplink grant. At 418, the UE 110 transmits to the DU 195 an L1 report for the detected PCI and RSRP.

Solution 2 422 comprises items 424 and 426. At 424, the UE 110 transmits to the DU 195 a replacement of the contents of UCI on a periodic L1-report with CRC masked by a specific bit pattern. At 426, the UE 110 transmits to the DU 195 an L1 report with contents replaced by a detected set report with padding bits to fill the length of the current CSI-Report.

Solution 3 432 comprises items 434, 436, and 438. At 434, the UE 110 transmits to the DU 195 a reserved bit in the L1-RSRP report indicating the presence of the CSI-Report for detected cells. At 436, the DU 195 transmits to the UE 110 using PDCCH an aperiodic CSI report comprising a flag with a detected set report. At 438, the UE 110 transmits to the DU 195 an L1-report for the detected set on an assigned location by the PDCCH.

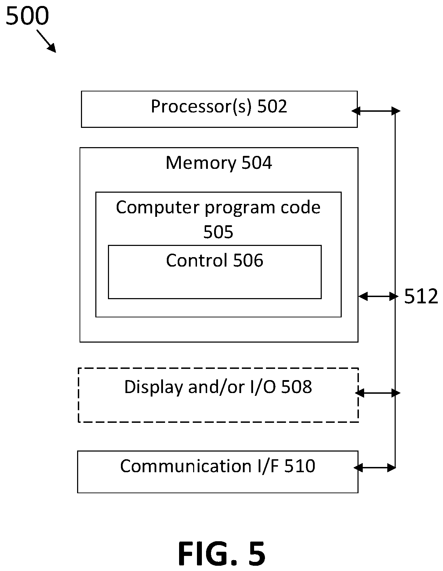

FIG. 5 is an example apparatus 500, which may be implemented in hardware, configured to implement the examples described herein. The apparatus 500 comprises at least one processor 502 (e.g. an FPGA and/or CPU), at least one memory 504 including computer program code 505, wherein the at least one memory 504 and the computer program code 505 are configured to, with the at least one processor 502, cause the apparatus 500 to implement circuitry, a process, component, module, or function (collectively control 506) to implement the examples described herein, including UE initiated aperiodic L1 measurement report for detected cells based on L3 measurements. The memory 504 may be a non-transitory memory, a transitory memory, a volatile memory (e.g. RAM), or a non-volatile memory (e.g. ROM).

The apparatus 500 optionally includes a display and/or I/O interface 508 that may be used to display aspects or a status of the methods described herein (e.g., as one of the methods is being performed or at a subsequent time), or to receive input from a user such as with using a keypad, camera, touchscreen, touch area, microphone, biometric recognition, etc. The apparatus 500 includes one or more communication e.g. network (N/W) interfaces (I/F(s)) 510. The communication I/F(s) 510 may be wired and/or wireless and communicate over the Internet/other network(s) via any communication technique. The communication I/F(s) 510 may comprise one or more transmitters and one or more receivers. The communication I/F(s) 510 may comprise standard well-known components such as an amplifier, filter, frequency-converter, (de)modulator, and encoder/decoder circuitries and one or more antennas.

The apparatus 500 to implement the functionality of control 506 may be UE 110, RAN node 170 (e.g. gNB), or network element(s) 190. Thus, processor 502 may correspond to processor(s) 120, processor(s) 152 and/or processor(s) 175, memory 504 may correspond to memory(ies) 125, memory(ies) 155 and/or memory(ies) 171, computer program code 505 may correspond to computer program code 123, module 140-1, module 140-2, and/or computer program code 153, module 150-1, module 150-2, and/or computer program code 173, and communication I/F(s) 510 may correspond to transceiver 130, antenna(s) 128, transceiver 160, antenna(s) 158, N/W I/F(s) 161, and/or N/W I/F(s) 180. Alternatively, apparatus 500 may not correspond to either of UE 110, RAN node 170, or network element(s) 190, as apparatus 500 may be part of a self-organizing/optimizing network (SON) node, such as in a cloud.

The apparatus 500 may also be distributed throughout the network (e.g. 100) including within and between apparatus 500 and any network element (such as a network control element (NCE) 190 and/or the RAN node 170 and/or the UE 110).

Interface 512 enables data communication between the various items of apparatus 500, as shown in FIG. 5. For example, the interface 512 may be one or more buses such as address, data, or control buses, and may include any interconnection mechanism, such as a series of lines on a motherboard or integrated circuit, fiber optics or other optical communication equipment, and the like. Computer program code 505, including control 506 may comprise object-oriented software configured to pass data/messages between objects within computer program code 505. The apparatus 500 need not comprise each of the features mentioned, or may comprise other features as well.

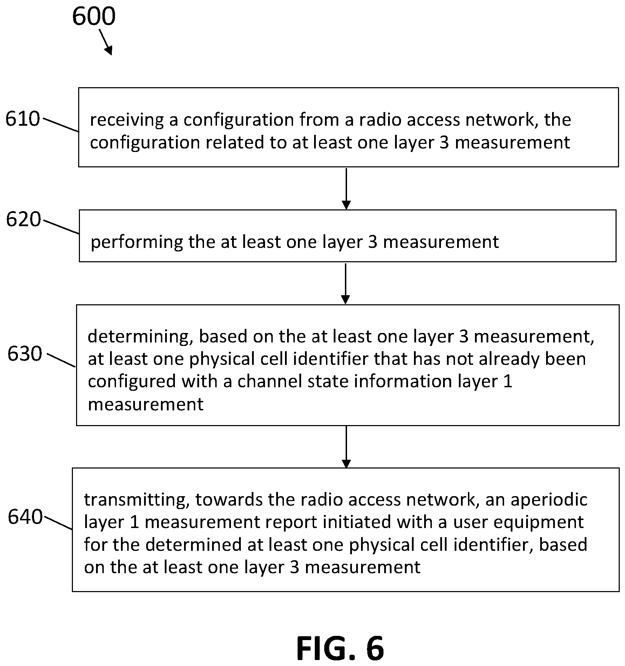

FIG. 6 is a method 600 to implement the example embodiments described herein. At 610, the method includes receiving , as claimed, a configuration from a radio access network, the configuration related to at least one layer 3 measurement. At 620, the method includes performing, as claimed, the at least one layer 3 measurement. At 630, the method includes determining, as claimed, based on the at least one layer 3 measurement, at least one physical cell identifier that has not already been configured with a channel state information layer 1 measurement. At 640, the method includes transmitting, as claimed, towards the radio access network, an aperiodic layer 1 measurement report initiated with a user equipment for the determined at least one physical cell identifier, based on the at least one layer 3 measurement. Method 600 may be performed with a user equipment (e.g. UE 110).

The following description may provide further details of alternatives, modifications and variances: a gNB comprises e.g. a node providing NR user plane and control plane protocol terminations towards the UE, and connected via the NG interface to the 5GC, e.g. according to 3GPP TS 38.300 V16.6.0 (2021-06) section 3.2 incorporated by reference.

A gNB Central Unit (gNB-CU) comprises e.g. a logical node hosting e.g. RRC, SDAP and PDCP protocols of the gNB or RRC and PDCP protocols of the en-gNB that controls the operation of one or more gNB-DUs. The gNB-CU terminates the F1 interface connected with the gNB-DU.

A gNB Distributed Unit (gNB-DU) comprises e.g. a logical node hosting e.g. RLC, MAC and PHY layers of the gNB or en-gNB, and its operation is partly controlled by the gNB-CU. One gNB-DU supports one or multiple cells. One cell is supported by only one gNB-DU. The gNB-DU terminates the F1 interface connected with the gNB-CU.

A gNB-CU-Control Plane (gNB-CU-CP) comprises e.g. a logical node hosting e.g. the RRC and the control plane part of the PDCP protocol of the gNB-CU for an en-gNB or a gNB. The gNB-CU-CP terminates the E1 interface connected with the gNB-CU-UP and the F1-C interface connected with the gNB-DU.

A gNB-CU-User Plane (gNB-CU-UP) comprises e.g. a logical node hosting e.g. the user plane part of the PDCP protocol of the gNB-CU for an en-gNB, and the user plane part of the PDCP protocol and the SDAP protocol of the gNB-CU for a gNB. The gNB-CU-UP terminates the E1 interface connected with the gNB-CU-CP and the F1-U interface connected with the gNB-DU, e.g. according to 3GPP TS 38.401 V16.6.0 (2021-07) section 3.1 incorporated by reference.

Different functional splits between the central and distributed unit are possible, e.g. called options:

Option 1 (1A-like split)

- The function split in this option is similar to the 1A architecture in DC. RRC is in the central unit. PDCP, RLC, MAC, physical layer and RF are in the distributed unit.

Option 2 (3C-like split)

- The function split in this option is similar to the 3C architecture in DC. RRC and PDCP are in the central unit. RLC, MAC, physical layer and RF are in the distributed unit.

Option 3 (intra RLC split)

- Low RLC (partial function of RLC), MAC, physical layer and RF are in the distributed unit. PDCP and high RLC (the other partial function of RLC) are in the central unit.

Option 4 (RLC-MAC split)

- MAC, physical layer and RF are in the distributed unit. PDCP and RLC are in the central unit.

Or else, e.g. according to 3GPP TR 38.801 V14.0.0 (2017-03) section 11 incorporated by reference.

A gNB supports different protocol layers, e.g.

Layer 1 (L1) - physical layer.

The layer 2 (L2) of NR is split into the following sublayers: Medium Access Control (MAC), Radio Link Control (RLC), Packet Data Convergence Protocol (PDCP) and Service Data Adaptation Protocol (SDAP), where e.g.:

- The physical layer offers to the MAC sublayer transport channels;

- The MAC sublayer offers to the RLC sublayer logical channels;

- The RLC sublayer offers to the PDCP sublayer RLC channels;

- The PDCP sublayer offers to the SDAP sublayer radio bearers;

- The SDAP sublayer offers to 5GC QoS flows;

- Comp. refers to header compression and segm. to segmentation;

- Control channels include (BCCH, PCCH).

Layer 3 (L3) includes e.g. Radio Resource Control (RRC), e.g. according to 3GPP TS 38.300 V16.6.0 (2021-06) section 6 incorporated by reference.

A RAN (Radio Access Network) node or network node like e.g. a gNB, base station, gNB CU or gNB DU or parts thereof may be implemented using e.g. an apparatus with at least one processor and/or at least one memory (with computer-readable instructions (computer program)) configured to support and/or provision and/or process CU and/or DU related functionality and/or features, and/or at least one protocol (sub-)layer of a RAN (Radio Access Network), e.g. layer 2 and/or layer 3.

The gNB CU and gNB DU parts may e.g. be co-located or physically separated. The gNB DU may even be split further, e.g. into two parts, e.g. one including processing equipment and one including an antenna. A Central Unit (CU) may also be called BBU/REC/RCC/C-RAN/V-RAN, O-RAN, or part thereof. A Distributed Unit (DU) may also be called RRH/RRU/RE/RU, or part thereof.

A gNB-DU supports one or multiple cells, and could thus serve as e.g. a serving cell for a user equipment (UE).

A user equipment (UE) may include a wireless or mobile device, an apparatus with a radio interface to interact with a RAN (Radio Access Network), a smartphone, an in-vehicle apparatus, an IoT device, a M2M device, or else. Such UE or apparatus may comprise: at least one processor; and at least one memory including computer program code; wherein the at least one memory and the computer program code are configured to, with the at least one processor, cause the apparatus at least to perform certain operations, like e.g. RRC connection to the RAN. A UE is e.g. configured to generate a message (e.g. including a cell ID) to be transmitted via radio towards a RAN (e.g. to reach and communicate with a serving cell). A UE may generate and transmit and receive RRC messages containing one or more RRC PDUs (Packet Data Units).

The UE may have different states (e.g. according to 3GPP TS 38.331 V16.5.0 (2021-06) sections 42.1 and 4.4, incorporated by reference).

A UE is e.g. either in RRC_CONNECTED state or in RRC_INACTIVE state when an RRC connection has been established.

In RRC_CONNECTED state a UE may:

- store the AS context;

- transfer unicast data to/from the UE;

- monitor control channels associated with the shared data channel to determine if data is scheduled for the data channel;

- provide channel quality and feedback information;

- perform neighboring cell measurements and measurement reporting;

The RRC protocol includes e.g. the following main functions:

- RRC connection control;
- measurement configuration and reporting;
- establishment/modification/release of measurement configuration (e.g. intra-frequency, inter-frequency and inter-RAT measurements);
- setup and release of measurement gaps;
- measurement reporting.

References to a 'computer', 'processor', etc. should be understood to encompass not only computers having different architectures such as single/multi-processor architectures and sequential or parallel architectures but also specialized circuits such as field-programmable gate arrays (FPGAs), application specific circuits (ASICs), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

The memory(ies) as described herein may be implemented using any suitable data storage technology, such as semiconductor based memory devices, flash memory, magnetic memory devices and systems, optical memory devices and systems, non-transitory memory, transitory memory, fixed memory and removable memory. The memory(ies) may comprise a database for storing data.

As used herein, the term 'circuitry' may refer to the following: (a) hardware circuit implementations, such as implementations in analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. As a further example, as used herein, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

In the figures, arrows between individual blocks represent operational couplings there-between as well as the direction of data flows on those couplings.

It should be understood that the foregoing description is only illustrative. Various alternatives and modifications may be devised by those skilled in the art. For example, features recited in the various dependent claims could be combined with each other in any suitable combination(s). In addition, features from different example embodiments described above could be selectively combined into a new example embodiment. Accordingly, this description is intended to embrace all such alternatives, modifications and variances which fall within the scope of the appended claims.

The following acronyms and abbreviations that may be found in the specification and/or the drawing figures are defined as follows (the abbreviations and acronyms may be appended with each other or with other characters using e.g. a dash or hyphen):

| | |
|---|---|
| 1A | 3GPP configuration where user plane data is split in the core network |
| 3C | 3GPP configuration where user plane data is split in the MeNB or MgNB |
| 3GPP | third generation partnership project |
| 4G | fourth generation |
| 5G | fifth generation |
| 5GC | 5G core network |
| AMF | access and mobility management function |
| AS | access stratum |
| ASIC | application-specific integrated circuit |
| BBU | baseband unit |
| BCCH | broadcast control channel |
| BWP | bandwidth part |
| C | control or control plane (e.g. F1-C) |
| CE | control element |
| CHO | conditional handover |
| Comp. | compression |
| Config | configuration |
| CP | control plane |
| CPU | central processing unit |
| C-RAN | centralized/cloud RAN |
| CRC | cyclic redundancy check |
| CRI | CSI-RS resource indicator |
| CSI | channel state information |
| CU | central unit or centralized unit |
| DC | dual connectivity |
| DCI | downlink control information |
| DSP | digital signal processor |
| DU | distributed unit |
| E1 | interface connecting a disaggregated user plane to a disaggregated control plane (e.g. a point-to-point interface between a gNB-CU-CP and a gNB-CU-UP) |
| eNB | evolved Node B (e.g., an LTE base station) |
| EN-DC | E-UTRAN new radio - dual connectivity |
| en-gNB | node providing NR user plane and control plane protocol terminations towards the UE, and acting as a secondary node in EN-DC |
| E-UTRA | evolved universal terrestrial radio access, i.e., the LTE radio access technology |
| E-UTRAN | E-UTRA network |
| F1 | interface between the CU and the DU |
| FPGA | field-programmable gate array |

| | |
|---|---|
| gNB | base station for 5G/NR, i.e., a node providing NR user plane and control plane protocol terminations towards the UE, and connected via the NG interface to the 5GC |
| IAB | integrated access and backhaul |
| ID | identifier or identity |
| I/F | interface |
| IM | interference measurement |
| I/O | input/output |
| IoT | internet of things |
| L1 | layer 1 |
| L2 | layer 2 |
| L3 | layer 3 |
| LMF | location management function |
| LTE | long term evolution (4G) |
| MAC | medium access control |
| meas | measurement |
| M | master |
| M2M | machine to machine |
| MME | mobility management entity |
| Msg-A | message A in the 2-step random access procedure |
| Msg-B | message B in the 2-step random access procedure |
| multi-RAT | multiple radio access technology |
| NCE | network control element |
| ng or NG | new generation |
| ng-eNB | new generation eNB |
| NG-RAN | new generation radio access network |
| NR | new radio (5G) |
| NW | network |
| N/W | network |
| NZP | non-zero-power |
| O-RAN | open radio access network |
| PCCH | paging control channel |
| PCI | physical cell ID |
| PDA | personal digital assistant |
| PDCCH | physical downlink control channel |
| PDCP | packet data convergence protocol |
| PDSCH | physical downlink shared channel |
| PDU | packet data unit |
| PHY | physical layer |
| PMI | Precoding Matrix Indication |
| PUCCH | physical uplink control channel |
| PUSCH | physical uplink shared channel |
| QoS | quality of service |
| R1 | RAN meeting |
| RACH | random access channel |
| RAM | random access memory |
| RAN | radio access network |
| RAT | radio access technology |
| RCC | radio cloud center |
| RE | radio equipment |
| REC | radio equipment controller |
| Rel- | release |
| RF | radio frequency |
| RLC | radio link control |
| RNTI | radio network temporary identifier |
| ROM | read-only memory |
| RRH | remote radio head |
| RRC | radio resource control (protocol) |
| RS | reference signal |

| RSRP | reference signal received power |
| RU | radio unit |
| Rx | receiver or reception |
| SDAP | service data adaptation protocol |
| segm. | segmentation |
| SGW | serving gateway |
| SMF | session management function |
| SON | self-organizing/optimizing network |
| SP | semi-persistent |
| SR | scheduling request |
| ssb or SSB | synchronization signal block |
| SSBRI | SSB resource indicator |
| TCI | transmission configuration indicator |
| TR | technical report |
| TRP | transmission and/or reception point |
| TS | technical specification |
| TTT | time-to-trigger |
| Tx | transmitter or transmission |
| UCI | uplink control information |
| U-CSI | UE-triggered channel state information |
| UE | user equipment (e.g., a wireless, typically mobile device) |
| UP | user plane |
| UPF | user plane function |
| V | version |
| V-RAN | virtual radio access network |
| WID | work item description |
| X2 | network interface between RAN nodes and between RAN and the core network |
| Xn | network interface between NG-RAN nodes |

**Claims**

1. An apparatus comprising:

   at least one processor; and
   at least one memory including computer program code;
   wherein the at least one memory and the computer program code are configured to, with the at least one processor, cause the apparatus at least to:

   receive (610) a configuration from a radio access network, the configuration related to at least one layer 3 measurement;
   perform (620) the at least one layer 3 measurement;
   determine (630), based on the at least one layer 3 measurement, at least one physical cell identifier that has not already been configured with a channel state information layer 1 measurement; and
   transmit (640), towards the radio access network, an aperiodic layer 1 measurement report initiated with a user equipment for the determined at least one physical cell identifier, based on the at least one layer 3 measurement.

2. The apparatus of claim 1, wherein the configuration is received from a network node supporting central unit functionality and/or a layer 3 protocol of the radio access network.

3. The apparatus of claim 1, wherein the aperiodic layer 1 measurement report is transmitted towards a network node supporting distributed unit functionality and/or a layer 2 protocol of the radio access network.

4. The apparatus of claim 1, wherein the configuration is received via a layer 3 Radio Resource Control message.

5. The apparatus of claim 1, wherein the aperiodic layer 1 measurement report is transmitted using a layer 2 Medium Access Control message.

6. The apparatus of claim 1, wherein the apparatus is implemented as or as part of a user equipment.

7. The apparatus of claim 1, wherein the apparatus is configured to support processing of layer 2 and layer 3 protocol messages.

8. The apparatus of claim 3, wherein the aperiodic layer 1 measurement report is configured to enable the network node supporting distributed unit functionality and/or the layer 2 protocol of the radio access network to initiate lower layer mobility, based on the user equipment initiated aperiodic layer 1 measurement report.

9. The apparatus of claim 8, wherein the lower layer mobility refers to layer 2 mobility.

10. The apparatus of claim 1, wherein the aperiodic layer 1 measurement report comprises at least one reference signal receive power measurement.

11. The apparatus of claim 1, wherein the aperiodic layer 1 measurement report is transmitted based on a trigger type, where the trigger type comprises a random access channel, a scheduling request, or a cyclic redundancy check changed layer 1 report.

12. The apparatus of claim 1, wherein:

the configuration is received from a network node supporting central unit functionality, and the aperiodic layer 1 measurement report is transmitted towards a network node supporting distributed unit functionality, and the network node supporting central unit functionality and the network node supporting distributed unit functionality are within a common network node; or
the configuration is received from the network node supporting central unit functionality, and the aperiodic layer 1 measurement report is transmitted towards the network node supporting distributed unit functionality, and the network node supporting central unit functionality and the network node supporting distributed unit functionality are in different network nodes.

13. The apparatus of claim 1, wherein the configuration received from the radio access network comprises a resource configuration for uplink channel state information or a linked measurement identifier.

14. The apparatus of claim 1, wherein the at least one memory and the computer program code are configured to, with the at least one processor, cause the apparatus at least to:

receive from the radio access network a configuration comprising a dedicated preamble; and
receive from the radio access network a PUSCH configuration for sending the aperiodic layer 1 measurement report, or receive from the radio access network a PUCCH configuration to send a 1-bit scheduling request for sending the aperiodic layer 1 measurement report.

15. The apparatus of claim 14, wherein the at least one memory and the computer program code are configured to, with the at least one processor, cause the apparatus at least to:

in response to the dedicated preamble and the PUSCH configuration being configured based on a 2-step random access procedure, transmit to the radio access network the dedicated preamble followed with a Msg-A;
wherein the Msg-A comprises the determined at least one physical cell identifier, and at least one reference signal receive power measurement of the determined at least one physical cell identifier.

16. The apparatus of claim 15, wherein content of the Msg-A is configured to be interpreted as detected set physical cell identifier measurements.

17. The apparatus of claim 15, wherein the dedicated preamble comprises a Msg-A preamble, and the Msg-A preamble is used to differentiate a normal reporting procedure from an uplink control information reporting procedure.

18. The apparatus of claim 15, wherein content of the Msg-A is configured to interpreted as a specification based layer 1 report, or the content of the Msg-A is based on a Msg-B comprising a MAC-CE interpreted on a MAC layer.

19. The apparatus of claim 14, wherein the at least one memory and the computer program code are configured to, with the at least one processor, cause the apparatus at least to:

in response to receiving the PUCCH configuration, transmit the scheduling request to the radio access network using an allocated PUSCH sent in a PDCCH with a radio network temporary identifier, the radio network temporary identifier comprising a layer 1 reference signal receive power radio network temporary identifier; and transmit, to the radio access network, the aperiodic layer 1 measurement report on the allocated PUSCH using a channel state information reference signal report format;

wherein aperiodic layer 1 measurement report comprises at least one reference signal receive power measurement for the determined at least one physical cell identifier.

20. The apparatus of claim 19, wherein the at least one memory and the computer program code are configured to, with the at least one processor, cause the apparatus at least to:
in response to transmitting the scheduling request using the PUSCH allocation, receive on a PDCCH and assignment of a PUSCH or PUCCH resource to transmit new uplink control information comprising detected set measurements.

21. The apparatus of claim 20, wherein the new uplink control information comprises a new type of aperiodic channel state information report, or a new MAC-CE.

22. The apparatus of claim 1, wherein the at least one memory and the computer program code are configured to, with the at least one processor, cause the apparatus at least to:

transmit, to the radio access network, the aperiodic layer 1 measurement report for the determined at least one physical cell identifier in at least one ongoing layer 1 measurement report with scrambling of cyclic redundancy check bits;
wherein uplink control information bits are re-interpreted as detected cell report contents.

23. The apparatus of claim 22, wherein reserved padding bits are used to fill the ongoing layer 1 measurement report.

24. The apparatus of claim 22, wherein the scrambling of the cyclic redundancy check bits is used to differentiate the aperiodic layer 1 measurement report from the at least one ongoing layer 1 measurement report.

25. The apparatus of claim 22, wherein the cyclic redundancy check bits are configured to be used with a network node to detect a format of uplink control information.

26. The apparatus of claim 22, wherein the scrambling of the cyclic redundancy check bits comprises a bitmask, and the bitmask is applied to create a distance in bits between the aperiodic layer 1 measurement report and the ongoing layer 1 measurement report.

27. The apparatus of claim 1, wherein the at least one memory and the computer program code are configured to, with the at least one processor, cause the apparatus at least to:

transmit, to the radio access network, a reserved bit within a periodic channel state information report to indicate a presence of the determined at least one physical cell identifier;
receive, from the radio access network with a physical downlink control channel or MAC-CE, a configuration to trigger aperiodic channel state information reporting of the aperiodic layer 1 measurement report;
wherein the configuration to trigger aperiodic channel state information reporting received from the radio access network with the physical downlink channel or MAC-CE comprises an indication that resources are used to report a detected set of measurements of the at least one physical cell identifier; and
transmit the aperiodic layer 1 measurement report for the detected set of measurements on a location assigned with the physical downlink control channel.

28. The apparatus of claim 27, wherein the aperiodic layer 1 measurement report for the detected set of measurements is transmitted on a location assigned with the physical downlink control channel or the MAC-CE.

29. The apparatus of claim 27, wherein the configuration to trigger aperiodic channel state information reporting comprises a 1-bit indication.

30. The apparatus of claim 27, wherein the configuration to trigger aperiodic channel state information reporting of the aperiodic layer 1 measurement report is received with downlink control information.

31. A method comprising:

   receiving (610) a configuration from a radio access network, the configuration related to at least one layer 3 measurement;
   performing (620) the at least one layer 3 measurement;
   determining (630), based on the at least one layer 3 measurement, at least one physical cell identifier that has not already been configured with a channel state information layer 1 measurement; and
   transmitting (640), towards the radio access network, an aperiodic layer 1 measurement report initiated with a user equipment for the determined at least one physical cell identifier, based on the at least one layer 3 measurement.

32. A non-transitory program storage device readable by a machine, tangibly embodying a program of instructions executable with the machine for performing operations, the operations comprising:

   receiving (610) a configuration from a radio access network, the configuration related to at least one layer 3 measurement;
   performing (620) the at least one layer 3 measurement;
   determining (630), based on the at least one layer 3 measurement, at least one physical cell identifier that has not already been configured with a channel state information layer 1 measurement; and
   transmitting (640), towards the radio access network, an aperiodic layer 1 measurement report initiated with a user equipment for the determined at least one physical cell identifier, based on the at least one layer 3 measurement.

**Patentansprüche**

1. Einrichtung, die Folgendes umfasst:

   mindestens einen Prozessor; und
   mindestens einen Speicher, der Computerprogrammcode beinhaltet;
   wobei der mindestens eine Speicher und der Computerprogrammcode dazu ausgelegt sind, die Einrichtung mit dem mindestens einen Prozessor mindestens zu Folgendem zu veranlassen:

   Empfangen (610) einer Auslegung von einem Funkzugangsnetzwerk, wobei sich die Auslegung auf eine Schicht-3-Messung bezieht;
   Durchführen (620) der mindestens einen Schicht-3-Messung;
   Bestimmen (630) von mindestens einer physischen Zellkennung, die noch nicht mit einer Kanalzustandsinformations-Schicht-1-Messung ausgelegt wurde, auf Basis der mindestens einen Schicht-3-Messung; und
   Übertragen (640) eines aperiodischen Schicht-1-Messberichts, der mit einer Teilnehmereinrichtung für die bestimmte mindestens eine physische Zellkennung initiiert wird, auf Basis der mindestens einen Schicht-3-Messung zum Funkzugangsnetzwerk.

2. Einrichtung nach Anspruch 1, wobei die Auslegung von einem Netzwerkknoten empfangen wird, der eine Funktionalität einer Zentraleinheit und/oder ein Schicht-3-Protokoll des Funkzugangsnetzwerks unterstützt.

3. Einrichtung nach Anspruch 1, wobei der aperiodische Schicht-1-Messbericht zu einem Netzwerkknoten übertragen wird, der eine Funktionalität einer verteilten Einheit und/oder ein Schicht-2-Protokoll des Funkzugangsnetzwerks unterstützt.

4. Einrichtung nach Anspruch 1, wobei die Auslegung via eine Schicht-3-Funkressourcensteuernachricht empfangen wird.

5. Einrichtung nach Anspruch 1, wobei der aperiodische Schicht-1-Messbericht unter Verwendung einer Schicht-2-Medienzugangssteuernachricht übertragen wird.

6. Einrichtung nach Anspruch 1, wobei die Einrichtung als eine Teilnehmereinrichtung oder ein Teil davon implementiert wird.

7. Einrichtung nach Anspruch 1, wobei die Einrichtung dazu ausgelegt ist, eine Verarbeitung von Schicht-2- und Schicht-3-Protokollnachrichten zu unterstützen.

8. Einrichtung nach Anspruch 3, wobei der aperiodische Schicht-1-Messbericht dazu ausgelegt ist, es dem Netzwerkknoten, der eine Funktionalität einer verteilten Einheit und/oder das Schicht-2-Protokoll des Funkzugangsnetzwerks unterstützt, zu ermöglichen, auf Basis des von der Teilnehmereinrichtung initiierten aperiodischen Schicht-1-Messberichts eine Mobilität einer niedrigen Schicht zu initiieren.

9. Einrichtung nach Anspruch 8, wobei sich die Mobilität einer niedrigen Schicht auf eine Schicht-2-Mobilität bezieht.

10. Einrichtung nach Anspruch 1, wobei der aperiodische Schicht-1-Messbericht mindestens eine Messung einer Referenzsignalempfangsleistung umfasst.

11. Einrichtung nach Anspruch 1, wobei der aperiodische Schicht-1-Messbericht auf Basis einer Auslöserart übertragen wird, wo die Auslöserart einen geeigneten Schicht-1-Bericht zu einem Direktzugriffskanal, einer Planungsanforderung oder einer zyklischen Redundanzprüfung umfasst.

12. Einrichtung nach Anspruch 1, wobei:

   die Auslegung von einem Netzwerkknoten empfangen wird, der eine Funktionalität einer Zentraleinheit unterstützt, und der aperiodische Schicht-1-Messbericht zu einem Netzwerkknoten übertragen wird, der eine Funktionalität einer verteilten Einheit unterstützt, und sich der Netzwerkknoten, der eine Funktionalität einer Zentraleinheit unterstützt, und der Netzwerkknoten, der eine Funktionalität einer verteilten Einheit unterstützt, in einem gemeinsamen Netzwerkknoten befinden; oder
   die Auslegung vom Netzwerkknoten empfangen wird, der eine Funktionalität einer Zentraleinheit unterstützt, und der aperiodische Schicht-1-Messbericht zum Netzwerkknoten übertragen wird, der eine Funktionalität einer verteilten Einheit unterstützt, und sich der Netzwerkknoten, der eine Funktionalität einer Zentraleinheit unterstützt, und der Netzwerkknoten, der eine Funktionalität einer verteilten Einheit unterstützt, in verschiedenen Netzwerkknoten befinden.

13. Einrichtung nach Anspruch 1, wobei die Auslegung, die vom Funkzugangsnetzwerk empfangen wird, eine Ressourcenauslegung für Uplinkkanalzustandsinformationen oder eine verlinkte Messkennung umfasst.

14. Einrichtung nach Anspruch 1, wobei der mindestens eine Speicher und der Computerprogrammcode dazu ausgelegt sind, die Einrichtung mit dem mindestens einen Prozessor mindestens zu Folgendem zu veranlassen:

   Empfangen einer Auslegung, die eine dedizierte Präambel umfasst, vom Funkzugangsnetzwerk; und
   Empfangen einer PUSCH-Auslegung zum Senden des aperiodischen Schicht-1-Messberichts oder Empfangen einer PUCCH-Auslegung zum Senden einer 1-Bit-Planungsanforderung zum Senden des aperiodischen Schicht-1-Messberichts vom Funkzugangsnetzwerk.

15. Einrichtung nach Anspruch 14, wobei der mindestens eine Speicher und der Computerprogrammcode dazu ausgelegt sind, die Einrichtung mit dem mindestens einen Prozessor mindestens zu Folgendem zu veranlassen:

   in Reaktion darauf, dass die dedizierte Präambel und die PUSCH-Auslegung auf Basis einer 2-stufigen Direktzugriffsprozedur ausgelegt sind, Übertragen der dedizierten Präambel, der eine Msg-A folgt, zum Funkzugangsnetzwerk;
   wobei die Msg-A die bestimmte mindestens eine physische Zellkennung und mindestens eine Messung einer Referenzsignalempfangsleistung der bestimmten mindestens einen physischen Zellkennung umfasst.

16. Einrichtung nach Anspruch 15, wobei ein Inhalt der Msg-A dazu ausgelegt ist, als ein detektierter Satz von physischen Zellkennungsmessungen interpretiert zu werden.

17. Einrichtung nach Anspruch 15, wobei die dedizierte Präambel eine Msg-A-Präambel umfasst und die Msg-A-Präambel zum Unterscheiden einer normalen Meldeprozedur von einer Uplinksteuerinformationsmeldeprozedur verwendet wird.

18. Einrichtung nach Anspruch 15, wobei ein Inhalt der Msg-A dazu ausgelegt ist, als ein spezifikationsbasierter Schicht-1-Bericht interpretiert zu werden, oder der Inhalt der Msg-A auf einer Msg-B basiert, die ein MAC-CE umfasst, das auf einer MAC-Schicht interpretiert ist.

19. Einrichtung nach Anspruch 14, wobei der mindestens eine Speicher und der Computerprogrammcode dazu ausgelegt sind, die Einrichtung mit dem mindestens einen Prozessor mindestens zu Folgendem zu veranlassen:

   in Reaktion auf das Empfangen der PUCCH-Auslegung Übertragen der Planungsanforderung unter Verwendung eines zugeteilten PUSCH, der in einem PDCCH mit einer temporären Funknetzwerkskennung gesendet wird, zum Funkzugangsnetzwerk, wobei die temporäre Funknetzwerkskennung eine temporäre Funknetzwerkskennung für eine Schicht-1-Referenzsignalempfangsleistung umfasst; und
   Übertragen des aperiodischen Schicht-1-Messberichts auf einem zugeteilten PUSCH unter Verwendung eines Kanalzustandsinformationsreferenzsignalberichtsformats zum Funkzugangsnetzwerk;
   wobei der aperiodische Schicht-1-Messbericht mindestens eine Messung einer Referenzsignalempfangsleistung für die bestimmte mindestens eine physische Zellkennung umfasst.

20. Einrichtung nach Anspruch 19, wobei der mindestens eine Speicher und der Computerprogrammcode dazu ausgelegt sind, die Einrichtung mit dem mindestens einen Prozessor mindestens zu Folgendem zu veranlassen:
   in Reaktion auf das Übertragen der Planungsanforderung unter Verwendung der PUSCH-Zuteilung Empfangen einer Zuweisung einer PUSCH- oder einer PUCCH-Ressource zum Übertragen von neuen Uplinksteuerinformationen, die einen detektierten Satz von Messungen umfassen, auf einem PDCCH.

21. Einrichtung nach Anspruch 20, wobei die neuen Uplinksteuerinformationen eine neue Art eines aperiodischen Kanalzustandsinformationsberichts oder ein neues MAC-CE umfassen.

22. Einrichtung nach Anspruch 1, wobei der mindestens eine Speicher und der Computerprogrammcode dazu ausgelegt sind, die Einrichtung mit dem mindestens einen Prozessor mindestens zu Folgendem zu veranlassen:

   Übertragen des aperiodischen Schicht-1-Messberichts für die bestimmte mindestens eine physische Zellkennung in mindestens einem laufenden Schicht-1-Messbericht mit einem Scrambling von zyklischen Redundanzprüfbits zum Funkzugangsnetzwerk;
   wobei Uplinksteuerinformationsbits als ein detektierter Zellberichtsinhalt neu interpretiert werden.

23. Einrichtung nach Anspruch 22, wobei reservierte Auffüllbits verwendet werden, um den laufenden Schicht-1-Messbericht aufzufüllen.

24. Einrichtung nach Anspruch 22, wobei das Scrambling der zyklischen Redundanzprüfbits zum Unterscheiden des aperiodischen Schicht-1-Messberichts von dem mindestens einen laufenden Schicht-1-Messbericht verwendet wird.

25. Einrichtung nach Anspruch 22, wobei die zyklischen Redundanzprüfbits dazu ausgelegt sind, mit einem Netzwerkknoten verwendet zu werden, um ein Format von Uplinksteuerinformationen zu detektieren.

26. Einrichtung nach Anspruch 22, wobei das Scrambling der zyklischen Redundanzprüfbits eine Bitmaske umfasst, und die Bitmaske angewandt wird, um zwischen dem aperiodischen Schicht-1-Messbericht und dem laufenden Schicht-1-Messbericht einen Abstand in Bits zu erstellen.

27. Einrichtung nach Anspruch 1, wobei der mindestens eine Speicher und der Computerprogrammcode dazu ausgelegt sind, die Einrichtung mit dem mindestens einen Prozessor mindestens zu Folgendem zu veranlassen:

   Übertragen eines reservierten Bits in einem periodischen Kanalzustandsinformationsbericht zum Funkzugangsnetzwerk, um ein Vorhandensein der bestimmten mindestens einen physischen Zellkennung anzuzeigen;
   Empfangen einer Auslegung zum Auslösen einer aperiodischen Kanalzustandsinformationsmeldung des aperiodischen Schicht-1-Messberichts vom Funkzugangsnetzwerk mit einem physischen Downlinksteuerkanal oder einem MAC-CE;
   wobei die Auslegung zum Auslösen einer aperiodischen Kanalzustandsinformationsmeldung, die vom Funkzugangsnetzwerk mit dem physischen Downlinksteuerkanal oder dem MAC-CE empfangen wird, eine Anzeige umfasst, dass Ressourcen verwendet werden, um einen detektierten Satz von Messungen von mindestens einer physischen Zellkennung zu melden; und

Übertragen des aperiodischen Schicht-1-Messberichts für den detektierten Satz von Messungen auf einem Standort, der mit dem physischen Downlinksteuerkanal zugewiesen ist.

28. Einrichtung nach Anspruch 27, wobei der aperiodische Schicht-1-Messbericht für den detektierten Satz von Messungen auf einem Standort übertragen wird, der mit dem physischen Downlinksteuerkanal oder dem MAC-CE zugewiesen ist.

29. Einrichtung nach Anspruch 27, wobei die Auslegung zum Auslösen einer aperiodischen Kanalzustandsinformationsmeldung eine 1-Bit-Anzeige umfasst.

30. Einrichtung nach Anspruch 27, wobei die Auslegung zum Auslösen einer aperiodischen Kanalzustandsinformationsmeldung des aperiodischen Schicht-1-Messberichts mit Downlinksteuerinformationen empfangen wird.

31. Verfahren, das Folgendes umfasst:

Empfangen (610) einer Auslegung von einem Funkzugangsnetzwerk, wobei sich die Auslegung auf eine Schicht-3-Messung bezieht;
Durchführen (620) der mindestens einen Schicht-3-Messung;
Bestimmen (630) von mindestens einer physischen Zellkennung, die noch nicht mit einer Kanalzustandsinformations-Schicht-1-Messung ausgelegt wurde, auf Basis der mindestens einen Schicht-3-Messung; und
Übertragen (640) eines aperiodischen Schicht-1-Messberichts, der mit einer Teilnehmereinrichtung für die bestimmte mindestens eine physische Zellkennung initiiert wird, auf Basis der mindestens einen Schicht-3-Messung zum Funkzugangsnetzwerk.

32. Nichttransitorische Programmspeichervorrichtung, die von einer Maschine lesbar ist, auf der sich greifbar ein Programm von Anweisungen befindet, die mit der Maschine zum Durchführen von Operationen ausführbar sind, wobei die Operationen Folgendes umfassen:

Empfangen (610) einer Auslegung von einem Funkzugangsnetzwerk, wobei sich die Auslegung auf eine Schicht-3-Messung bezieht;
Durchführen (620) der mindestens einen Schicht-3-Messung;
Bestimmen (630) von mindestens einer physischen Zellkennung, die noch nicht mit einer Kanalzustandsinformations-Schicht-1-Messung ausgelegt wurde, auf Basis der mindestens einen Schicht-3-Messung; und
Übertragen (640) eines aperiodischen Schicht-1-Messberichts, der mit einer Teilnehmereinrichtung für die bestimmte mindestens eine physische Zellkennung initiiert wird, auf Basis der mindestens einen Schicht-3-Messung zum Funkzugangsnetzwerk.

**Revendications**

1. Appareil comprenant :

au moins un processeur ; et
au moins une mémoire comportant un code de programme informatique ;
dans lequel l'au moins une mémoire et le code de programme informatique sont configurés pour, avec l'au moins un processeur, amener l'appareil à au moins :

recevoir (610) une configuration d'un réseau d'accès radio, la configuration étant liée à au moins une mesure de couche 3 ;
effectuer (620) l'au moins une mesure de couche 3 ;
sur la base de l'au moins une mesure de couche 3, déterminer (630) au moins un identifiant de cellule physique qui n'a pas encore été configuré avec une mesure de couche 1 d'informations d'état de canal ; et
transmettre (640) au réseau d'accès radio un rapport de mesure de couche 1 apériodique initié avec un équipement utilisateur pour l'au moins un identifiant de cellule physique déterminé sur la base de l'au moins une mesure de couche 3.

**2.** Appareil selon la revendication 1, dans lequel la configuration est reçue d'un nœud de réseau prenant en charge une fonctionnalité d'unité centrale et/ou un protocole de couche 3 du réseau d'accès radio.

**3.** Appareil selon la revendication 1, dans lequel le rapport de mesure de couche 1 apériodique est transmis à un nœud de réseau prenant en charge une fonctionnalité d'unité distribuée et/ou un protocole de couche 2 du réseau d'accès radio.

**4.** Appareil selon la revendication 1, dans lequel la configuration est reçue via un message de contrôle de ressources radio de couche 3.

**5.** Appareil selon la revendication 1, dans lequel le rapport de mesure de couche 1 apériodique est transmis à l'aide d'un message de contrôle d'accès au support de couche 2.

**6.** Appareil selon la revendication 1, dans lequel l'appareil est implémenté en tant qu'un équipement utilisateur ou en tant que partie de celui-ci.

**7.** Appareil selon la revendication 1, dans lequel l'appareil est configuré pour prendre en charge le traitement de messages de protocole de couche 2 et de couche 3.

**8.** Appareil selon la revendication 3, dans lequel le rapport de mesure de couche 1 apériodique est configuré pour permettre au nœud de réseau prenant en charge une fonctionnalité d'unité distribuée et/ou le protocole de couche 2 du réseau d'accès radio d'initier une mobilité de couche inférieure sur la base du rapport de mesure de couche 1 apériodique initié par l'équipement utilisateur.

**9.** Appareil selon la revendication 8, dans lequel la mobilité de couche inférieure fait référence à la mobilité de couche 2.

**10.** Appareil selon la revendication 1, dans lequel le rapport de mesure de couche 1 apériodique comprend au moins une mesure de puissance de réception de signal de référence.

**11.** Appareil selon la revendication 1, dans lequel le rapport de mesure de couche 1 apériodique est transmis sur la base d'un type de déclencheur, où le type de déclencheur comprend un canal d'accès aléatoire, une demande de planification ou un rapport de couche 1 modifié par une vérification de redondance cyclique.

**12.** Appareil selon la revendication 1, dans lequel :

la configuration est reçue d'un nœud de réseau prenant en charge une fonctionnalité d'unité centrale, et le rapport de mesure de couche 1 apériodique est transmis à un nœud de réseau prenant en charge une fonctionnalité d'unité distribuée, et le nœud de réseau prenant en charge une fonctionnalité d'unité centrale et le nœud de réseau prenant en charge une fonctionnalité d'unité distribuée se trouvent dans un nœud de réseau commun ; ou
la configuration est reçue du nœud de réseau prenant en charge une fonctionnalité d'unité centrale, et le rapport de mesure de couche 1 apériodique est transmis au nœud de réseau prenant en charge une fonctionnalité d'unité distribuée, et le nœud de réseau prenant en charge une fonctionnalité d'unité centrale et le nœud de réseau prenant en charge une fonctionnalité d'unité distribuée se trouvent dans des nœuds réseau différents.

**13.** Appareil selon la revendication 1, dans lequel la configuration reçue du réseau d'accès radio comprend une configuration de ressources pour des informations d'état de canal de liaison montante ou un identifiant de mesure lié.

**14.** Appareil selon la revendication 1, dans lequel l'au moins une mémoire et le code de programme informatique sont configurés pour, avec l'au moins un processeur, amener l'appareil à au moins :

recevoir du réseau d'accès radio une configuration comprenant un préambule dédié ; et
recevoir du réseau d'accès radio une configuration PUSCH pour envoyer le rapport de mesure de couche 1 apériodique, ou recevoir du réseau d'accès radio une configuration PUCCH pour envoyer une demande de planification à 1 bit pour envoyer le rapport de mesure de couche 1 apériodique.

**15.** Appareil selon la revendication 14, dans lequel l'au moins une mémoire et le code de programme informatique sont configurés pour, avec l'au moins un processeur, amener l'appareil à au moins :

en réponse au préambule dédié, et lorsque la configuration PUSCH est configurée sur la base d'une procédure d'accès aléatoire en 2 étapes, transmettre au réseau d'accès radio le préambule dédié suivi d'un Msg-A ; dans lequel le Msg-A comprend l'au moins un identifiant de cellule physique déterminé, et au moins une mesure de puissance de réception de signal de référence de l'au moins un identifiant de cellule physique déterminé.

16. Appareil selon la revendication 15, dans lequel un contenu du Msg-A est configuré pour être interprété comme un ensemble détecté de mesures d'identifiant de cellule physique.

17. Appareil selon la revendication 15, dans lequel le préambule dédié comprend un préambule Msg-A, et le préambule Msg-A est utilisé pour différencier une procédure de rapport normale d'une procédure de rapport d'informations de contrôle de liaison montante.

18. Appareil selon la revendication 15, dans lequel un contenu du Msg-A est configuré pour être interprété comme un rapport de couche 1 basé sur une spécification, ou le contenu du Msg-A est basé sur un Msg-B comprenant un MAC-CE interprété sur une couche MAC.

19. Appareil selon la revendication 14, dans lequel l'au moins une mémoire et le code de programme informatique sont configurés pour, avec l'au moins un processeur, amener l'appareil à au moins :

en réponse à la réception de la configuration PUCCH, transmettre la demande de planification au réseau d'accès radio à l'aide d'un PUSCH alloué envoyé dans un PDCCH avec un identifiant temporaire de réseau radio, l'identifiant temporaire de réseau radio comprenant un identifiant temporaire de réseau radio de puissance de réception de signal de référence de couche 1 ; et
transmettre au réseau d'accès radio le rapport de mesure de couche 1 apériodique sur le PUSCH alloué à l'aide d'un format de rapport de signal de référence d'informations d'état de canal ;
dans lequel rapport de mesure de couche 1 apériodique comprend au moins une mesure de puissance de réception de signal de référence pour l'au moins un identifiant de cellule physique déterminé.

20. Appareil selon la revendication 19, dans lequel l'au moins une mémoire et le code de programme informatique sont configurés pour, avec l'au moins un processeur, amener l'appareil à au moins :
en réponse à la transmission de la demande de planification à l'aide de l'allocation PUSCH, recevoir sur un PDCCH une attribution d'une ressource PUSCH ou PUCCH pour transmettre de nouvelles informations de contrôle de liaison montante comprenant un ensemble détecté de mesures.

21. Appareil selon la revendication 20, dans lequel les nouvelles informations de contrôle de liaison montante comprennent un nouveau type de rapport d'informations d'état de canal apériodique, ou un nouveau MAC-CE.

22. Appareil selon la revendication 1, dans lequel l'au moins une mémoire et le code de programme informatique sont configurés pour, avec l'au moins un processeur, amener l'appareil à au moins :

transmettre au réseau d'accès radio le rapport de mesure de couche 1 apériodique pour l'au moins un identifiant de cellule physique déterminé dans au moins un rapport de mesure de couche 1 en cours avec un brouillage des bits de vérification de redondance cyclique ;
dans lequel bits d'informations de contrôle de liaison montante sont réinterprétés comme un contenu de rapport de cellule détecté.

23. Appareil selon la revendication 22, dans lequel des bits de remplissage réservés sont utilisés pour remplir le rapport de mesure de couche 1 en cours.

24. Appareil selon la revendication 22, dans lequel le brouillage des bits de vérification de redondance cyclique est utilisé pour différencier le rapport de mesure de couche 1 apériodique de l'au moins un rapport de mesure de couche 1 en cours.

25. Appareil selon la revendication 22, dans lequel les bits de vérification de redondance cyclique sont configurés pour être utilisés avec un nœud de réseau afin de détecter un format d'informations de contrôle de liaison montante.

26. Appareil selon la revendication 22, dans lequel le brouillage des bits de vérification de redondance cyclique comprend un masque de bits, et le masque de bits est appliqué pour créer une distance des bits entre le rapport de mesure de couche 1 apériodique et le rapport de mesure de couche 1 en cours.

**27.** Appareil selon la revendication 1, dans lequel l'au moins une mémoire et le code de programme informatique sont configurés pour, avec l'au moins un processeur, amener l'appareil à au moins :

transmettre au réseau d'accès radio un bit réservé dans un rapport d'informations d'état de canal périodique pour indiquer la présence de l'au moins un identifiant de cellule physique déterminé ;

recevoir du réseau d'accès radio avec un canal physique de contrôle de liaison descendante ou un MAC-CE une configuration pour déclencher un rapport d'informations d'état de canal apériodique du rapport de mesure de couche 1 apériodique ;

dans lequel la configuration pour déclencher un rapport d'informations d'état de canal apériodique reçu du réseau d'accès radio avec le canal physique de contrôle de liaison descendante ou le MAC-CE comprend une indication selon laquelle des ressources sont utilisées pour rapporter un ensemble détecté de mesures de l'au moins un identifiant de cellule physique ; et

transmettre le rapport de mesure de couche 1 apériodique pour l'ensemble détecté de mesures sur un emplacement attribué au canal physique de contrôle de liaison descendante.

**28.** Appareil selon la revendication 27, dans lequel le rapport de mesure de couche 1 apériodique pour l'ensemble détecté de mesures est transmis sur un emplacement attribué au canal physique de contrôle de liaison descendante ou au MAC-CE.

**29.** Appareil selon la revendication 27, dans lequel la configuration pour déclencher un rapport d'informations d'état de canal apériodique comprend une indication de 1 bit.

**30.** Appareil selon la revendication 27, dans lequel la configuration pour déclencher un rapport d'informations d'état de canal apériodique du rapport de mesure de couche 1 apériodique est reçue avec des informations de contrôle de liaison descendante.

**31.** Procédé comprenant les étapes suivantes :

recevoir (610) une configuration d'un réseau d'accès radio, la configuration étant liée à au moins une mesure de couche 3 ;

effectuer (620) l'au moins une mesure de couche 3 ;

sur la base de l'au moins une mesure de couche 3, déterminer (630) au moins un identifiant de cellule physique qui n'a pas encore été configuré avec une mesure de couche 1 d'informations d'état de canal ; et

transmettre (640) au réseau d'accès radio un rapport de mesure de couche 1 apériodique initié avec un équipement utilisateur pour l'au moins un identifiant de cellule physique déterminé sur la base de l'au moins une mesure de couche 3.

**32.** Dispositif de stockage de programme non transitoire lisible par une machine, incarnant de manière tangible un programme d'instructions exécutables avec la machine pour réaliser des opérations, les opérations comprenant les étapes suivantes :

recevoir (610) une configuration d'un réseau d'accès radio, la configuration étant liée à au moins une mesure de couche 3 ;

effectuer (620) l'au moins une mesure de couche 3 ;

sur la base de l'au moins une mesure de couche 3, déterminer (630) au moins un identifiant de cellule physique qui n'a pas encore été configuré avec une mesure de couche 1 d'informations d'état de canal ; et

transmettre (640) au réseau d'accès radio un rapport de mesure de couche 1 apériodique initié avec un équipement utilisateur pour l'au moins un identifiant de cellule physique déterminé sur la base de l'au moins une mesure de couche 3.

FIG. 1

FIG.2

EP 4 515 941 B1

**MEASUREMENT-CONFIG** 302

- NZP-CSI-RS RESOURCE SET 304
- CSI-RS-IM RESOURCE SET 306
- CSI-SSB RESOURCE SET 308
- CSI RESOURCE CONFIG LIST 310
- CSI-REPORT CONFIG LIST 312
- TRIGGER-STATE LIST (FOR APERIODIC AND SP-ON-PUSCH) 314

**RESOURCE CONFIG** 322

- RESOURCE-SET-LIST (SSB OR NZP-CSI-RS) 324
- RESOURCE-SET-LIST-IM 326
- RESOURCE-TYPE (PERIODIC/APERIODIC/SP) 328
- BWP 330

**REPORT CONFIG** 342

- RESOURCE-FOR-CHANNEL MEASUREMENT 344
- RESOURCE-FOR-IM 346
- NZP-RESOURCE-FOR-IM 348
- REPORT TYPE 350
  - PERIODIC/SP/APERIODIC
  - REPORT ON PUCCH/PUSCH (ONLY FOR SP)
  - PUSCH-RESOURCE-CONGIG
- REPORT QUANTITY 352
  - CRI/CSI/PMI/L1-RSRP/SSB-INDEX/SSB-INDEX-RSRP

327 311 313 345 347 349

**FIG.3**

26

110 — UE                                                                          196 — CU          DU

402 — [ RRC CONNECTION ]                                                                     195

404, RRC RECONFIGURATION (UE-TRIGGERED-CSI-
DETECTED-CELLS, TRIGGER-TYPE: RACH/SR/CRC-
CHANGED-L1-REPORT, RESOURCE-CONFIG-FOR-U-CSI,
LINKED-MEASUREMENT-ID)

406, RRC RECONFIGURATION COMPLETE

UE CHECKS THE
MEASUREMENT RESULTS OF  — 408
LINKED MEASUREMENT ID
PRIOR TO L3 FILTERING

IF PCI NOT CONFIGURED IN
CSI MEAS-CONFIG DETECTED  — 410
UE TRIGGER THE CSI REPORT
USING CONFIGURED TRIGGER TYPE

SOLUTION 1

414, DEDICATED PREAMBLE/DEDICATED SR
412 — TO TRIGGER CSI REPORT

416, ASSIGN UPLINK GRANT

418, L1-REPORT FOR DETECTED PCI AND RSRP

SOLUTION 2

424, REPLACE THE CONTENTS OF UCI ON PERIODIC L1-
422 — REPORT WITH CRC MASKED BY SPECIFIC BIT PATTERN

426, L1-REPORT CONTENTS REPLACES BY DETECTED
SET REPORT WITH PADDING BITS TO FILL THE LENGTH
OF CURRENT CSI-REPORT

SOLUTION 3

434, RESERVED BIT IN L1-RSRP REPORT
432 — INDICATE PRESENCE OF CSI-REPORT FOR DETECED CELLS

436, PDCCH: APERIODIC CSI REPORT
(FLAG: DETECTED SET REPORT)

438, L1-REPORT FOR DETECTED SET ON
ASSIGNED LOCATION BY PDCCH

# FIG.4

500

Processor(s) 502

Memory 504

Computer program code
505

Control 506

512

Display and/or I/O 508

Communication I/F 510

# FIG. 5

600

610 — receiving a configuration from a radio access network, the configuration related to at least one layer 3 measurement

620 — performing the at least one layer 3 measurement

630 — determining, based on the at least one layer 3 measurement, at least one physical cell identifier that has not already been configured with a channel state information layer 1 measurement

640 — transmitting, towards the radio access network, an aperiodic layer 1 measurement report initiated with a user equipment for the determined at least one physical cell identifier, based on the at least one layer 3 measurement

## FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021159351 A1

**Non-patent literature cited in the description**

- *3GPP TR 38.801 V14.0.0*, March 2017
- *3GPP TS 38.300 V16.6.0*, June 2021
- *3GPP TS 38.331 V16.5.0*, June 2021